# EUROPÄISCHE PATENTANMELDUNG

(11) **EP 1 389 687 A1**
(43) Veröffentlichungstag der Anmeldung: **18.02.2004**
(21) Anmeldenummer: 03008329.9
(22) Anmeldetag: 10.04.2003
(51) Int. Cl.: F16B 5/02, F16B 5/07, E04B 1/38, E04B 1/61

(54) **Verbindungselement**

(30) Priorität: 26.07.2002 DE 20211288 U
(71) Anmelder: fischerwerke Artur Fischer GmbH & Co. KG, 72178 Waldachtal (DE)
(72) Erfinder: Daly, Aaron, 72178 Waldachtal (DE)

(57) **Zusammenfassung**

Die Erfindung betrifft ein Verbindungselement (1) zum mechanischen Verbinden von Bauteilen (2, 3) oder dgl., bestehend aus zwei in Eingriff bringbaren Kupplungshälften (4, 5), die jeweils an den zu verbindenden Bauteilen (2, 3) mittels Schrauben (6) oder dgl. befestigbar sind, wobei die Kupplungshälften (4, 5) Schraubenaufnahmen (7) für die Schrauben (6) aufweisen. Um eine Befestigung der Kupplungshälften (4, 5) für die Verbindungselemente zu schaffen, die eine Grob- und Feinpositionierung erlauben, und dabei eine stabile Schraubenauflage gewährleisten, schlägt die Erfindung vor, dass die Schraubenaufnahmen (7) jeweils eine Schraubenkopfauflage (8) aufweisen, deren Form über den gesamten Umfang mit der Geometrie des Schraubenkopfes (10) korrespondiert, und wobei sich an die Schraubenkopfauflage (8) in Bauteilrichtung eine Stützhülse (9) anschließt, deren Innenquerschnitt sich in Bauteilrichtung aufweitet und wobei die Stützhülse (9) an ihrer Stirnseite (11) auf dem zu verbindenden Bauteil (2, 3) aufsitzt (Figur 1).

## Beschreibung

Die Erfindung betrifft ein Verbindungselement zum mechanischen Verbinden von Bauteilen oder dgl. mit den Merkmalen des Oberbegriffs des Anspruchs 1.

Derartige Verbindungselemente sind beispielsweise aus DE 10026769 A1 bekannt. Dabei wird im Rahmen einer Vormontage an jedes von zwei zu verbindenden Bauteilen oder dgl. je eine Kupplungshälfte mittels einer Schraube befestigt. Zur Verbindung der Bauteile werden die Kupplungshälften in Eingriff gebracht. Bei der Vormontage wird das Verbindungselement zunächst an das jeweilige Bauteil gehalten und dabei grob positioniert. Dann werden die Schrauben durch die entsprechenden Schraubenaufnahmen gesteckt und weitgehend in das Bauteil eingedreht. Zum Einsatz kommen entweder selbstschneidende Schrauben oder metrische Gewinde in Verbindung mit einer vorbereiteten Gewindebohrung. Im nächsten Schritt wird die Kupplungshälfte exakt positioniert und die Schraube fest angezogen. Um gegenüber der Grobposition eine Verschiebemöglichkeit zur Feinpositionierung zu gewährleisten, weisen die bekannten Kupplungshälften Langlöcher auf, deren Rand durch entsprechend langgezogene Stützhülsen gegenüber dem Bauteil gestützt wird.

Die bekannten Verbindungselemente weisen das Problem auf, dass die Schrauben beim Eindrehen mit einem Elektroschrauber aufgrund der geringen Auflagefläche für den Schraubenkopf häufig durch die Schraubenaufnahme hindurchbrechen. Damit wird eine prozesssichere Befestigung unmöglich. Außerdem ergibt sich die Verschiebemöglichkeit für die Feinpositionierung nur in einer Richtung, nämlich in Längsrichtung des Langlochs.

Der Erfindung liegt die Aufgabe zugrunde, eine Befestigung der beschriebenen Kupplungselemente für Verbindungselemente zu schaffen, die eine Grob- und Feinpositionierung erlauben, und dabei eine stabile Schraubenauflage gewährleisten.

Diese Aufgabe wird erfindungsgemäß durch das Verbindungselement mit den Merkmalen des Anspruchs 1 gelöst. Die Kupplungshälften des Verbindungselements weisen Schraubenaufnahmen auf, deren Schraubenkopfauflage die Schraube über ihren gesamten Umfang stützt. So ist die Schraubenkopfauflage an die Geometrie des Schraubenkopfes angepasst, beispielsweise hat sie eine konische Form für Senkkopfschrauben. Es handelt sich damit nicht um ein Langloch sondern um ein rotationssymmetrisches Loch in Verbindung mit einer rotationssymmetrischen Schraubenkopfauflage. Die auf die Schraubenkopfauflage wirkenden Kräfte werden durch eine Stützhülse, die auf dem Bauteil aufsitzt, in das Bauteil abgeleitet. Durch die Anordnung der Stützhülse unmittelbar im Anschluss der Schraubenkopfauflage werden Scherkräfte und Biegemomente im Umfeld der Schraubenkopfauflage weitgehend vermieden und damit eine sehr hohe Belastung der Schraube möglich. Um eine Grobund Feinpositionierung gewährleisten zu können, weitet sich der Innenquerschnitt der Stützhülse in Bauteilrichtung auf, vorzugsweise in konischer Form, so dass eine Verschiebung der Kupplungshälften in beliebiger Richtung bei bereits teilweise eingedrehten Schrauben möglich ist.

Neben den Stützhülsen kommen die Kupplungshälften an weiteren Flächen, beispielsweise dem Rand und/oder Versteifungsrippen, zur Anlage an dem entsprechenden Bauteil. Durch das Ableiten der Schraubenkräfte über die Stützhülse ergeben sich dabei die größten Flächenkräfte an den Stirnseiten der Stützhülsen. Bei weichem Material, beispielsweise Holz, kann dies dazu führen, dass das Bauteil im Bereich der Stützhülsen eingedrückt wird. Hierdurch kann es zu Biegungen innerhalb der Kupplungshälften mit der Folge von Rissen kommen. Um dem vorzubeugen, sieht eine bevorzugte Ausführung der Erfindung vor, dass die Stirnseite der Stützhülse über die Anlageebene der Kupplungshälfte hinausragt. Damit kommt die Stützhülse vor den anderen Anlageflächen der Kupplungshälfte in Kontakt mit dem Bauteil, senkt sich im Folgenden in das Material ein und verdichtet bzw. verfestigt es. Erst wenn bereits hohe Anzugskräfte entstanden sind, kommen die anderen Bereiche der Kupplungshälfte zur Anlage. Damit werden einerseits Durchbiegungen vermieden, andererseits wird durch das Eindringen in das Bauteil eine formschlüssige Verbindung geschaffen, die deutlich höhere Kräfte aufnehmen kann, als eine rein reibschlüssige Auflage der Kupplungshälften ermöglichen würde.

Verstärkt werden kann dieser Effekt durch das Anordnen von Vorsprüngen an der Stimseite der Stützhülse. Derartige Vorsprünge, beispielsweise ein Zahnkranz oder eine ringförmige Schneide, sind besonders zum Eindringen in das Bauteil, auch bei härterem Material geeignet. Sollte es sich jedoch um ein hartes Material, wie beispielsweise Stahl, handeln, schließt die Stirnseite der Stützhülse bündig mit der Auflagefläche der Kupplungshälfte ab.

Zur Optimierung der Kraftflüsse innerhalb der Kupplungshälften sieht eine bevorzugte Ausführung der Erfindung vor, dass die Stützhülse Versteifungsrippen aufweist, die die Stützhülse beispielsweise radial mit dem Rand der Kupplungshälfte oder einer weiteren Stützhülse verbindet.

Die Erfindung wird nachfolgend anhand eines in einer Zeichnung dargestellten Ausführungsbeispiels näher erläutert.

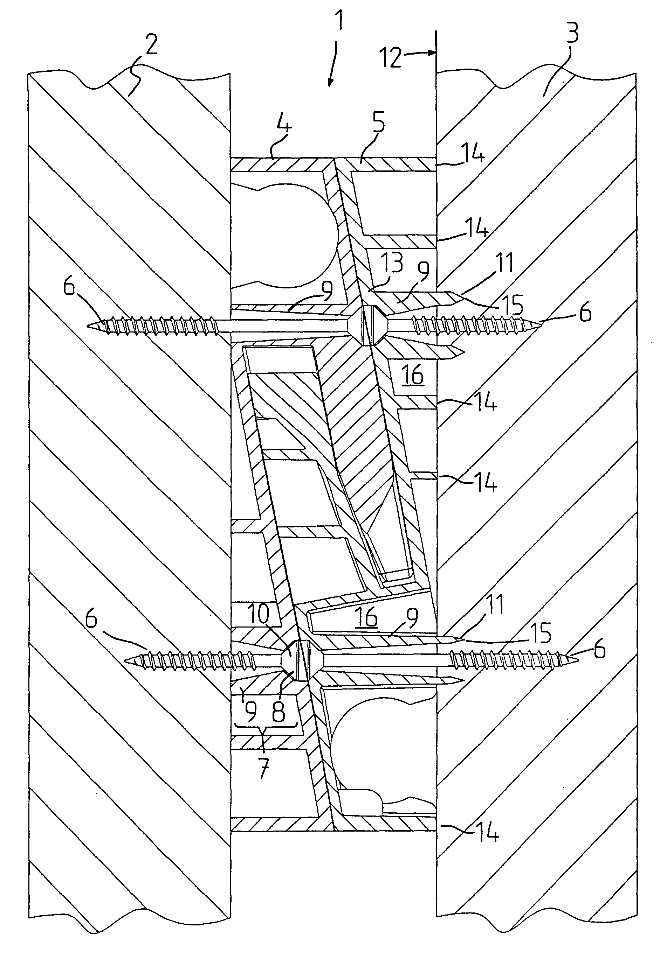

Das in Figur 1 dargestellte Verbindungselement 1 zum Verbinden der beiden Bauteile 2 und 3 besteht aus den beiden Kupplungshälften 4 und 5. Diese greifen im dargestellten eingebauten Zustand ineinander und sind jeweils durch Senkkopfschrauben 6 an den Bauteilen 2 und 3 befestigt. Dazu weisen die Kupplungshälften 4 und 5 jeweils mehrere Schraubenaufnahmen 7 auf. Die Schraubenaufnahmen 7 umfassen einerseits eine Schraubenkopfauflage 8 und andererseits eine auf dem jeweiligen Bauteil 2, 3 aufsitzende Stützhülse 9. Die Schraubenkopfauflage 8 hat eine konische Form wodurch es zu einer flächigen Auflage des Schraubenkopfes10 der Senkkopfschraube 6 kommt. Der Innenquerschnitt der Stützhülse 9 weitet sich konisch in Richtung des Bauteils auf.

Bei der Vormontage der Kupplungshälften 4 und 5 auf den Bauteilen 2 und 3 werden die Kupplungshälften 4 und 5 zunächst grob positioniert und die Senkkopfschrauben 6 beispielsweise mit einem Elektroschrauber bis zur Hälfte ihrer endgültigen Einschraubtiefe eingeschraubt. Hierdurch können die Senkkopfschrauben 6 bereits das Eigengewicht der Kupplungshälften 4 und 5 tragen. Im Weiteren werden die Kupplungshälften 4 und 5 feinpositioniert. Aufgrund der Elastizität der Senkkopfschrauben 6 und/oder des Materials der Bauteile 2 und 3 sowie insbesondere aufgrund des konischen Innenquerschnitts der Stützhülse 9 kann dabei eine deutliche Verschiebung erfolgen. Im Gegensatz zu einer langschlitzartigen Schraubenaufnahme können derartige Verschiebungen in beliebige Richtungen vorgenommen werden. Ist die genaue Position erreicht, werden die Senkkopfschrauben 6 weiter angezogen, bis ihr Schraubenkopf 10 auf der Schraubenkopfauflage 8 aufsitzt. Durch die flächige Auflage kann es nicht zu einem Durchbrechen der Schraubenkopfauflage 8 kommen. Versuche haben gezeigt, dass entsprechend hohen Anzugsmomenten vorher zum Versagen der Senkkopfschraube 6 oder des Bauteils 2 führt. Im fertig montierten Zustand wirkt der Schraubenkopf 10 auf die Schraubenkopfauflage 8, der die entsprechenden Kräfte im Wesentlichen über die Stützhülse 9 direkt auf das Bauteil 2 bzw. 3 überträgt.

In dem dargestellten Ausführungsbeispiel handelt es sich bei dem Bauteil 2 um ein hartes Material, beispielsweise Stahl, während das Bauteil 3 aus einem weichen Werkstoff, beispielsweise Holz, besteht. Bei der Kupplungshälfte 3 ist daher vorgesehen, dass die Stirnseiten 11 der Stützhülsen 9 über die Anlageebene 12 der Kupplungshälfte 3 hinausragen. Wäre dies nicht der Fall, so würden die Stützhülsen 9 aufgrund der Kraftverteilung in das Material eindringen und dabei an ihren Rändern 13 gegenüber der restlichen Kupplungshälfte 5 verbiegen. Dies würde zu Spannungsüberhöhungen im Material führen mit der Gefahr von Rissbildungen. Durch die gewählte Geometrie wird dagegen vor der Anlage der restlichen Auflageflächen 14 das Material des Bauteils 3 im Bereich der Stirnseiten 11 der Stützhülsen 9 verdichtet und dadurch verfestigt. Die Überhöhung der Stützhülsen 9 gegenüber der Anlageebene 12 ist so gewählt, dass es bei einem üblichen Anzugsmoment der Senkkopfschrauben 6 einerseits zu einer Anlage der Stützhülsen 9 und der restlichen Auflageflächen 14 kommt, und dass andererseits ein Verbiegen der Stützhülsen 9 an ihren Rändern 13 weitgehend vermieden wird. Das Eindringen der Stützhülsen 9 in das Material des Bauteils 3 hat den Vorteil, dass es zusätzlich zu einem Reibschluss zu einem Formschluss zwischen Kupplungshälfte 5 und Bauteil 3 kommt. Dies erhöht wesentlich die übertragbaren Kräfte. Daher sind zusätzlich Vorsprünge 15 an der Stirnseite 11 der Stützhülse 9 vorgesehen. Während im dargestellten Ausführungsbeispiel eine umlaufende Kante als Vorsprung 15 angeordnet ist, können diese auch in Form eines Zahnkranzes oder dgl. ausgeformt sein.

Um die Kraftverteilung weiter zu begünstigen, weist das Ausführungsbeispiel außerdem Versteifungsrippen 16 auf, die die Stützhülsen 9 mit weiteren Auflageflächen 14 verbinden.

Beim Bauteil 2, das aus einem harten Material besteht, tritt der Effekt der Verbiegung des Stützhülsen 9 nicht auf, da das Bauteil 2 kaum nachgibt. Daher ist hier keine Überhöhung der Stützhülsen 9 vorgesehen.

## Patentansprüche

1. Verbindungselement (1) zum mechanischen Verbinden von Bauteilen (2, 3) oder dgl., bestehend aus zwei in Eingriff bringbaren Kupplungshälften (4, 5), die jeweils an den zu verbindenden Bauteilen (2, 3) mittels Schrauben (6) oder dgl. befestigbar sind, und wobei die Kupplungshälften (4, 5) Schraubenaufnahmen (7) für die Schrauben (6) aufweisen, **dadurch gekennzeichnet, dass** die Schraubenaufnahmen (7) jeweils eine Schraubenkopfauflage (8) aufweisen, deren Form über den gesamten Umfang mit der Geometrie des Schraubenkopfes (10) korrespondiert, und wobei sich an die Schraubenkopfauflage (8) in Bauteilrichtung eine Stützhülse (9) anschließt, deren Innenquerschnitt sich in Bauteilrichtung aufweitet und wobei die Stützhülse (9) an ihrer Stirnseite (11) auf dem zu verbindenden Bauteil (2, 3) aufsitzt.

2. Verbindungselement nach Anspruch 1, **dadurch gekennzeichnet, dass** die Form der Schraubenkopfauflage (8) mit der Geometrie einer Senkkopfschraube (6) korrespondiert.

3. Verbindungselement nach Anspruch 1, **dadurch gekennzeichnet, dass** der Innenquerschnitt der Stützhülse (9) konisch ausgebildet ist.

4. Verbindungselement nach Anspruch 1, **dadurch gekennzeichnet, dass** die Stirnseite (11) der Stützhülse (9) über die Anlageebene (12) der Kupplungshälfte (5) hinausragt.

5. Verbindungselement nach Anspruch 1, **dadurch gekennzeichnet, dass** die Stirnseite (11) der Stützhülse (9) Vorsprünge (15) aufweist.

6. Verbindungselement nach Anspruch 1, **dadurch gekennzeichnet, dass** die Stützhülse (9) Versteifungsrippen (16) aufweist.
